# EUROPÄISCHE PATENTSCHRIFT

(11) **EP 2 848 724 B1**
(45) Veröffentlichungstag und Bekanntmachung des Hinweises auf die Patenterteilung: **15.06.2016**
(21) Anmeldenummer: 14179855.3
(22) Anmeldetag: 05.08.2014
(51) Int. Cl.: D06F 37/22, F16F 7/08, F16F 7/09, D06F 37/20

(54) **Reibungsdämpfer, insbesondere für Trommelwaschmaschinen**
Friction damper, especially for washing machines having a drum
Amortisseur à friction, en particulier pour lave-linge à tambour

(30) Priorität: 26.08.2013 DE 102013109198
(43) Veröffentlichungstag der Anmeldung: 18.03.2015
(73) Patentinhaber: Miele & Cie. KG, 33332 Gütersloh (DE)
(72) Erfinder: Bicker, Rainer, 33415 Verl (DE); Templin, Ralf, 33729 Bielefeld (DE); Wackermann, Lucas, 33602 Bielefeld (DE)

(56) Entgegenhaltungen:
- EP-A1- 1 477 603
- DE-C1- 4 420 612

## Beschreibung

Die Erfindung betrifft einen Reibungsdämpfer mit richtungs- und amplitudenabhängiger Dämpfung, insbesondere für Trommelwaschmaschinen mit Schleudergang, der ein Dämpfergehäuse und einen mit einer Kolbenstange verbundenen, in Zug- und Druckrichtung beweglichen Dämpferkolben mit mindestens einem an der Innenfläche des Dämpfergehäuses wirkenden Reibelement zur Erzeugung einer Dämpfkraft umfasst.

In Trommelwaschmaschinen mit Schleudergang sind zur Erzielung eines ruhigen und erschütterungsfreien Laufs zwischen dem im Wesentlichen aus dem Laugenbehälter und der in diesem angeordneten Wäschetrommel bestehenden Waschaggregat und dem Waschmaschinengehäuse Reibungsdämpfer angeordnet, die im kritischen Drehzahlbereich eine hohe Dämpfung und im über- und unterkritischen Drehzahlbereich eine geringe Dämpfung bewirken sollen. Die Reibungsdämpfer sollen zudem so ausgelegt sein, dass ein Versetzen der Waschmaschine aufgrund hoher in Zugrichtung wirkender Reibkräfte verhindert wird sowie Bodenkräfte und mit Geräuschen verbundene Bodenschwingungen aufgrund in Druckrichtung wirkender Reibkräfte reduziert werden.

Aus der EP 1 944 402 B1 ist ein für Trommelwaschmaschinen vorgesehener Reibungsdämpfer mit einem in einem zylindrischen Dämpfergehäuse verschiebbaren, mit Reibelementen versehenen Reibungskolben bekannt, bei dem durch einen vergrößerten Querschnittsbereich des Dämpfergehäuses eine von der Position des Reibungskolbens abhängige Änderung der Dämpfkraft bewirkt wird. Bei dem in der DE 10 2008 038133 A1 beschriebenen Freilaufdämpfer wird über eine Schaltung ein Freilauf realisiert, so dass der Reibbelag und die von diesem erzeugte Dämpfkraft erst ab einer bestimmten Auslenkung wirksam wird. Aus der DE 44 20 612 C1 und der EP 0407 755 A1 sind Reibungsdämpfer mit in einem zylindrischen Gehäuse geführtem, mit einer Kolbenstange verbundenen Reibungskolben bekannt, die mit konstruktiven Mitteln zur amplitudenabhängigen Änderung der auf die Gehäuseinnenwand wirkenden Reibkraft ausgebildet sind.

Die EP 1 477 603 A1 beschreibt einen variablen Dämpfer, bei welchem ein Zylinder als Reibkörper an einem Stab angeordnet ist, dessen eine Seite relativ beweglich in den Aufnahmeraum des Zylinders eingesetzt ist und eine andere Seite desselben mit dem Gehäuse verbunden ist.

Der Erfindung liegt die Aufgabe zugrunde, einen Reibungsdämpfer mit richtungs- und amplitudenabhängiger Dämpfung so auszubilden, dass eine hohe Unwuchtaufnahme gewährleistet ist und vom Waschaggregat ausgehende Bodenkräfte und Zugkräfte reduziert werden.

Erfindungsgemäß wird die Aufgabe mit einem gemäß den Merkmalen des Patentanspruchs 1 ausgebildeten Reibungsdämpfer gelöst. Vorteilhafte Weiterbildungen der Erfindung sind Gegenstand der Unteransprüche.

Der Grundgedanke der Erfindung besteht in der gasdichten Ausbildung des Dämpfergehäuses in dem zwischen seinem Boden und den in einem am Dämpferkolben zwischen einem ersten und zweiten Anschlag axial beweglich angeordneten Reibbelagsträger gehaltenen Reibelementen bestehenden Gehäuseteil, wobei in dem abgedichteten Gehäuseteil ein Verdichtungsraum für ein sich nach einer Freilaufphase in der Druckrichtung bzw. bei der Abwärtsbewegung aufbauendes Luftpolster zur Erzeugung einer über die von den Reibelementen bewirkte Reibkraft hinausgehenden Dämpfkraft gebildet wird. In der Druckrichtung wird somit eine von der Amplitude abhängige, durch eine Luftfeder unterstützte, erhöhte Dämpfkraft erzeugt. Im Dämpferkolben sind über die Bewegung des Reibbelagsträgers steuerbare Luftdurchlassventile angeordnet, die den Verdichtungsraum bei der Aufwärtsbewegung bzw. der Bewegung in Zugrichtung mit der Umgebung verbinden, so dass die verdichtete Luft entweichen kann bzw. in der weiteren Aufwärtsbewegung wieder Außenluft in den Verdichtungsraum eingesaugt werden kann. Nach einer Freilaufphase, in der der Reibbelagsträger noch nicht vom Dämpferkolben mitgenommen wird, gleiten die Reibelemente entlang der Innenwand des Dämpfergehäuses und in der Zugrichtung wird bei größerer Amplitude eine nur durch die Reibkraft bewirkte Dämpfkraft erzeugt.

Mit dem erfindungsgemäßen Reibungsdämpfer kann die Auslenkung des Waschaggregats in der Abwärtsbewegung stärker als in der Aufwärtsbewegung gedämpft werden. Dadurch werden einerseits die Bodenkräfte reduziert und andererseits hebt das Waschaggregat den Waschautomaten nicht an und die Gefahr eines Versatzes wird reduziert. Zudem werden große Auslenkungen stärker gedämpft als kleine Auslenkungen. Das heißt, die Dämpfung passt sich der Größe der Amplituden und damit auch den Unwuchten an.

Gemäß einem weiteren Merkmal der Erfindung sind dem Verdichtungsraum zur Begrenzung des Druckaufbaus im Verdichtungsraum und zur Erzielung einer durch das Luftpolster bewirkten gleichmäßigen Dämpfkraft Mittel zur Entlüftung zugeordnet.

In Ausgestaltung der Erfindung weist der Dämpferkolben einen Hohlraum und einen Kolbendeckel als ersten Anschlag zur Mitnahme des Reibbelagträgers nach einer Freilaufphase in der Druckrichtung sowie im Abstand zum Kolbendeckel einen offenen Kolbenboden als zweiten Anschlag zur Mitnahme des Reibbelagträgers nach einer Freilaufphase in Zugrichtung auf. Die Luftdurchlassöffnungen sind so im Dämpferkolben angeordnet, dass sie in der Anschlagposition des Reibbelagträgers am Kolbendeckel mithilfe des Reibbelagträgers geschlossen sind.

In vorteilhafter Weiterbildung der Erfindung weist der Dämpferkolben einen Hohlraum und einen offenen Kolbenboden auf, dessen Ober- und Unterseite als erster bzw. zweiter Anschlag zur Mitnahme des Reibbelagsträgers in der Druck- bzw. Zugrichtung dient. Von dem Reibbelagsträger strebt eine den Kolbenboden im Abstand übergreifende Reibbelagsträgerplatte mit Luftdurchlassöffnungen ab. Am Kolbenboden ausgebildete Ventilverschlusselemente greifen nach der Freilaufphase bei der Abwärtsbewegung des Dämpferkolbens in die Luftdurchlassöffnungen ein und geben die Luftdurchlassöffnungen bei der Aufwärtsbewegung frei.

In weiterer Ausbildung der Erfindung umfasst der Dämpferkolben ein inneres Kolbenteil mit einem als Lochscheibe ausgebildeten Kolbenboden und ein das innere Kolbenteil umfassendes, um eine Längsachse drehbares äußeres Kolbenteil mit einem als Lochscheibe ausgebildeten Kolbenboden. Der am Außenumfang des äußeren Kolbenteils angeordnete Reibbelagsträger greift in einen am äußeren Kolbenteil angeformten Führungssteg ein, um das äußere Kolbenteil zu verdrehen und damit die beiden Lochscheiben gegeneinander zu verdrehen und somit ein schnelles Schließen der Luftdurchlassöffnungen zu bewirken und die Wirkung der Luftfeder als zusätzliche Dämpfkraft zu verbessern.

Ausführungsbeispiele der Erfindung werden anhand der Zeichnung näher erläutert. Es zeigen:
- Fig. 1: eine schematische Schnittansicht eines richtungs- und amplitudenabhängig wirkenden Reibungsdämpfers, hier bei erhöhter Dämpfwirkung in der Druckrichtung;
- Fig. 2: den Reibungsdämpfer gemäß Fig. 1 nach dem Richtungswechsel des Dämpferkolbens von der Druck- in die Zugbewegung in einer Freilaufposition;
- Fig. 3: den Reibungsdämpfer gemäß Fig. 2, nach weiterer Bewegung des Dämpferkolbens in Zugrichtung bei gegenüber der Freilaufposition erhöhter Dämpfwirkung;
- Fig. 4: eine noch andere Ausführungsform des Reibungsdämpfers mit in einem modifizierten Kolbenboden ausgebildetem Luftdurchlassventil bei der Bewegung in Druckrichtung;
- Fig. 5: den Reibungsdämpfer nach Fig. 4 nach dem Wechsel von der Druck- in die Zugrichtung; und
- Fig. 6: eine weitere Ausführungsvariante des Reibungsdämpfers mit einem im Boden des Reibungskolbens ausgebildeten Schnellschluss-Durchlassventil.

Der Reibungsdämpfer umfasst ein an der Befestigungsseite mit einem Waschmaschinengehäuse (nicht dargestellt) luftdicht geschlossenes zylindrisches Dämpfergehäuse 1 und einen in diesem angeordneten, in Achsrichtung beweglichen Dämpferkolben 2. Eine mit dem Dämpferkolben 2 verbundene Kolbenstange 3 ist an ihrem freien Ende an das Waschaggregat einer Trommelwaschmaschine (nicht dargestellt) angeschlossen. Am Außenumfang des Dämpferkolbens 2 ist ein an diesem in Achsrichtung zwischen einem Kolbendeckel 4 (erster Anschlag) und einem Kolbenboden 5 (zweiter Anschlag) beweglicher Reibbelagsträger 6 mit einem an diesem fixierten Reibelement 7 angeordnet. Der Dämpferkolben 2 ist als zu einer Bodenplatte 8 des Dämpfergehäuses 1 hin offener, mit einer verschließbaren Luftdurchlassöffnung 9 (Luftdurchlassventil) versehener Hohlkörper ausgebildet. Über die verschließbare Luftdurchlassöffnung 9 kann in geöffnetem Zustand Außenluft in den zwischen der Bodenplatte 8 und dem Dämpferkolben 2 befindlichen Verdichtungsraum 10 einströmen oder auch wieder ins Freie gelangen. Das Reibelement 7 hat auch eine Dichtfunktion und dichtet den Verdichtungsraum 10 an der Innenwand des Dämpfergehäuses 1 gegenüber der Umgebung ab.

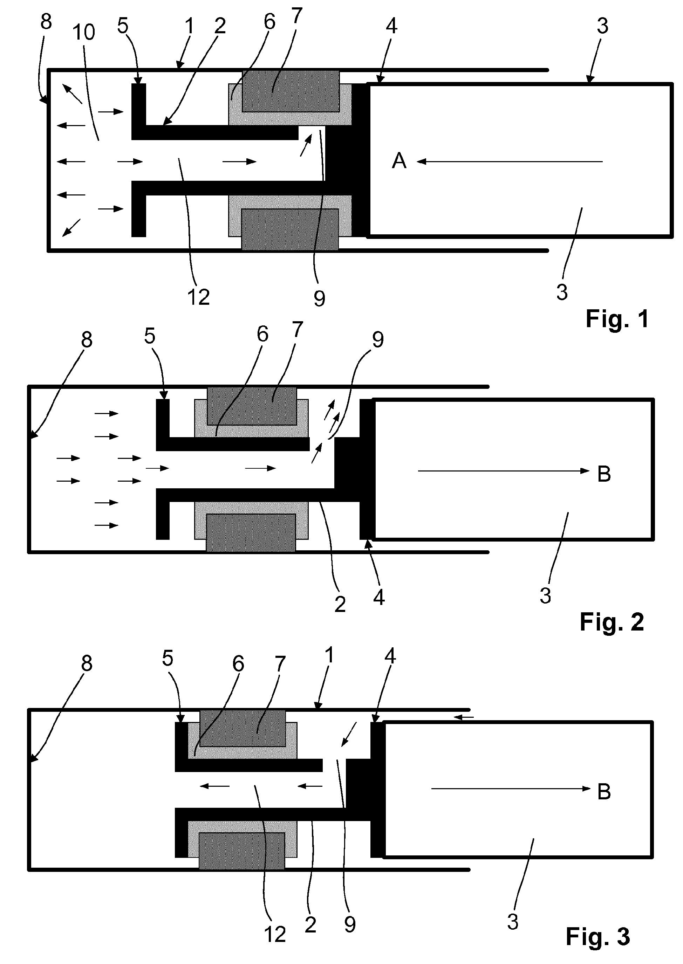

Bei dem in Fig. 1 gezeigten Reibungsdämpfer führt das Waschaggregat gerade eine Abwärtsbewegung (Pfeil A) aus, die richtungs- und amplitudenabhängig eine hohe Dämpfung erfordert. Die Kolbenstange 3 und der Dämpferkolben 2 bewegen sich in der Druckrichtung gemäß dem Pfeil A. Der am Außenumfang des Dämpferkolbens 2 in axialer Richtung beweglich angeordnete Reibbelagsträger 6 befindet sich am Kolbendeckel 4 (erster Anschlag) des Dämpferkolbens 2, wird von diesem in der Abwärtsbewegung mitgenommen und verschließt in der Position am Kolbendeckel 4 die Luftdurchlassöffnung 9. Aufgrund der Bewegung des Reibelements 7 an der Innenwand des Dämpfergehäuses 1 wird infolge der Reibung eine Dämpfkraft erzeugt, die mit der weiteren Abwärtsbewegung des Waschaggregats und damit des Dämpferkolbens 2 und der damit einhergehenden zunehmenden Verdichtung des im Verdichtungsraum 10 befindlichen Luftvolumens weiter erhöht wird. In der Druckrichtung ist die Dämpfkraft somit die Summe aus der Reibkraft des Reibelements 7 an der Innenwand des Dämpfergehäuses 1 und der auf den Dämpferkolben 2 wirkenden Federkraft der im Verdichtungsraum 10 von dem verdichteten Luftvolumen gebildeten Luftfeder. Der Verschluss der Luftdurchlassöffnung 9 ist so gestaltet, dass - wie durch die zur Luftdurchlassöffnung weisenden Pfeile angedeutet - ab einer bestimmten Verdichtung der Luft im Verdichtungsraum 10 eine Entlüftung erfolgen kann, um so einen weiteren Druckaufbau zu verhindern und eine gleichmäßige Dämpfkraft zu erreichen.

Fig. 2 zeigt den Reibungsdämpfer nach dem Wechsel der Bewegungsrichtung, das heißt von der Abwärtsbewegung in die Aufwärtsbewegung bzw. von der Druckrichtung in die durch den Pfeil B gekennzeichnete Zugrichtung. Bei der Bewegung in Zugrichtung gleitet der Dämpferkolben 2 zunächst an der Außenfläche des Reibbelagsträger 6, so dass während der anfänglichen Aufwärtsbewegung eine nur geringe Dämpfkraft und somit ein Freilauf des Dämpferkolbens erreicht wird. In dieser Phase wird die Luftdurchlassöffnung 9 freigegeben und die Luft aus dem Verdichtungsraum kann ins Freie entweichen. Bei der weiteren Bewegung des Dämpferkolbens 2 in Zugrichtung (Pfeil B) gelangt der Reibbelagsträger 6 an den Kolbenboden 5 (zweiter Anschlag) des Dämpferkolbens 2, so dass nun das Reibelement 7 entlang der Innenfläche des Dämpfergehäuses 1 verschoben wird und mit der weiteren Auslenkung des Waschaggregats in Zugrichtung eine höhere Dämpfkraft erzeugt wird, die jedoch geringer als die oben erläuterte, durch die Luftfeder unterstützte Dämpfkraft in der Abwärtsbewegung ist. Mit der weiteren Bewegung des Dämpferkolbens 2 in Zugrichtung wird über die Luftdurchlassöffnung 9 und den im Dämpferkolben 2 vorhandenen Hohlraum 12 Luft in den Verdichtungsraum 10 gesaugt. Nach dem Wechsel der Bewegungsrichtung in die Abwärtsbewegung wird der Dämpferkolben 2 zunächst in einer Phase geringer Dämpfung (Freilauf) und weiter von außen in den Verdichtungsraum 10 einströmender Luft entlang dem Reibbelagsträger 6 verschoben. Mit der weiteren Kolbenbewegung in Druckrichtung gemäß Pfeil B wird der Reibbelagsträger 6 mit dem Reibelement 7 mitgenommen, um so die Dämpfkraft infolge der Reibwirkung und des sich bei verschlossener Luftdurchlassöffnung 9 verdichtenden Luftvolumens wieder zu erhöhen.

Mit dem zuvor beschriebenen Reibungsdämpfer kann eine von der Bewegung des Dämpferkolbens und damit des Waschaggregats in Druckrichtung (Abwärtsbewegung) oder Zugrichtung (Aufwärtsbewegung) und von der Größe der Auslenkung (Amplitude) des Dämpferkolbens in der jeweiligen Richtung abhängige Dämpfung erfolgen. Die Dämpfung in Druckrichtung wird durch die im Verdichtungsraum geschaffene Luftfeder verstärkt.

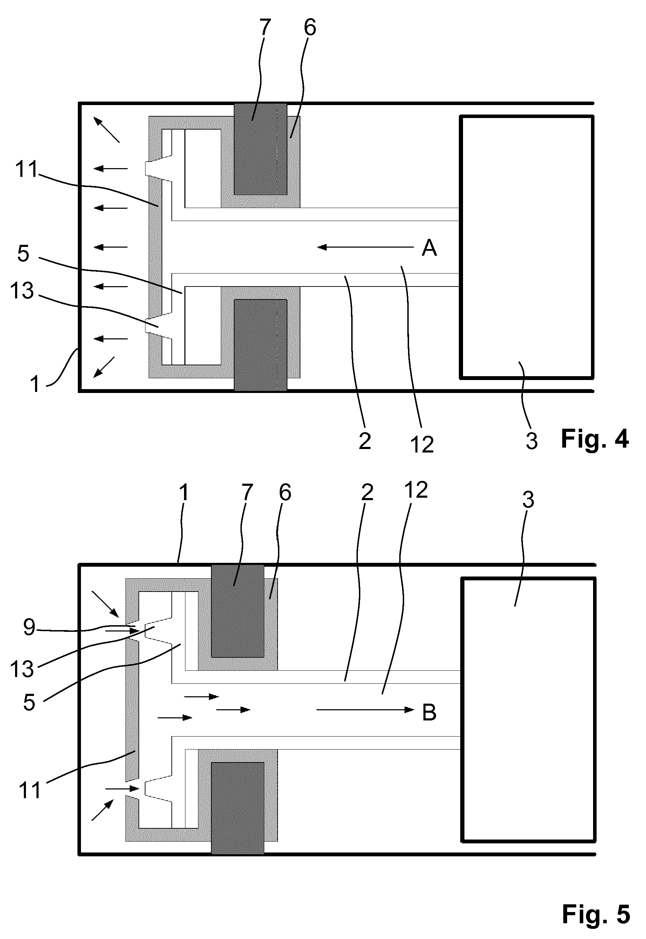

Die Figuren 4 und 5 zeigen noch eine andere Ausführungsform des nach dem zuvor geschilderten Prinzip richtungs- und amplitudenabhängig dämpfenden Reibungsdämpfers. Der am Dämpferkolben 2 axial beweglich gelagerte Reibbelagsträger 6 ist mit einer im Abstand von diesem angeordneten, den Kolbenboden 5 übergreifenden und der Bodenplatte 8 des Dämpfergehäuses 1 gegenüberliegenden Reibbelagsträgerplatte 11 ausgebildet. In der Reibbelagsträgerplatte 11 befinden sich Luftdurchlassöffnungen 9, die über den im Dämpferkolben 2 vorhandenen Hohlraum 12 eine Verbindung mit der Außenluft bzw. dem zwischen der Reibbelagsträgerplatte 11 und der Bodenplatte 8 des Dämpfergehäuses 1 vorhandenen Verdichtungsraum 10 herstellen. An der zur Reibbelagsträgerplatte 11 weisenden Seite des Kolbenbodens 5 sind Ventilverschlusselemente 13 zum Freigeben bzw. Verschließen der Luftdurchlassöffnungen 9 in der Reibbelagsträgerplatte 11 vorgesehen.

Bei der Bewegung des Dämpferkolbens 2 in Druckrichtung gemäß Pfeil A wird der Reibbelagsträger 6 mit Reibelement 7 und Reibbelagsträgerplatte 11 bei noch offenen Luftdurchlassöffnungen 9 in der Freilaufphase nicht mitgenommen. Sobald der Kolbenboden 5 bei der weiteren Bewegung an der Reibbelagsträgerplatte 11 anschlägt, wird der Reibbelagsträger 6 mit dem Reibelement 7 mitgenommen, so dass aufgrund der Reibwirkung eine Dämpfung erfolgt. Gleichzeitig werden die Luftdurchlassöffnungen 9 in der Reibbelagsträgerplatte 11 geschlossen und das im Verdichtungsraum 10 zwischen der Reibbelagsträgerplatte 11 und der Bodenplatte 8 des Dämpfergehäuses 1 befindliche Luftvolumen wird verdichtet, um die Dämpfwirkung mit fortschreitender Auslenkung des Dämpferkolbens 2 in Druckrichtung (Pfeil A) aufgrund der Wirkung der Luftfeder im Verdichtungsraum 10 weiter zu erhöhen.

Bei der in Fig. 5 wiedergegebenen Bewegung des am Waschaggregat angelenkten Dämpferkolbens 2 in Zugrichtung gemäß Pfeil B sind die Luftdurchlassöffnungen 9 freigegeben. Die zuvor verdichtete Luft kann ins Freie entweichen. Der Kolbenboden 5 kann sich in einer Freilaufphase bis zu dem vom Reibbelagsträger 6 gebildeten Anschlag bewegen. Nach dem Anschlagen des Kolbenbodens 5 an den Reibbelagsträger 6 wird das Reibelement 7 mit der weiteren Auslenkung des Waschaggregats in Zugrichtung entlang der Innenfläche des Dämpfergehäuses verschoben. Dadurch wird mit der größer werdenden Amplitude auch in Zugrichtung eine Dämpfwirkung erzielt, die jedoch geringer als die durch die Luftfeder im Verdichtungsraum 10 verstärkte Dämpfung in Druckrichtung ist.

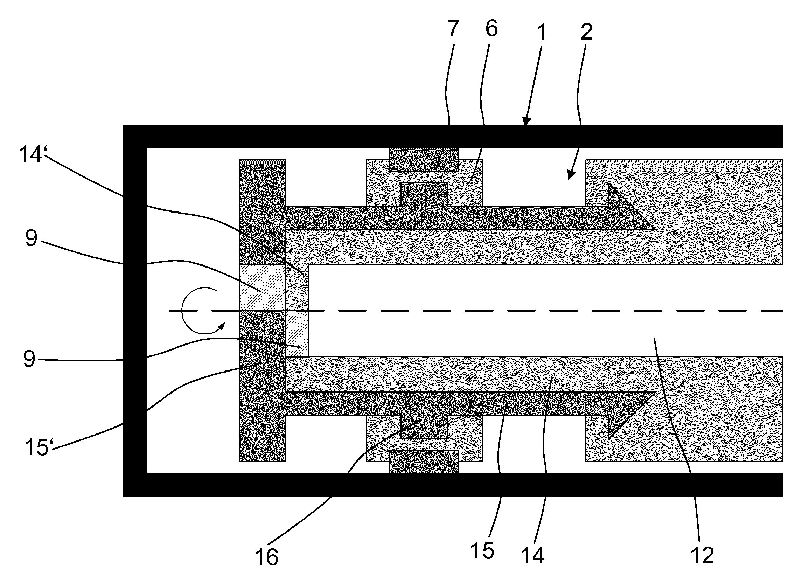

Bei der Bewegung des an das Waschaggregat gekoppelten Dämpferkolbens in Druckrichtung ist die dämpfende Wirkung des im Verdichtungsraum 10 erzeugten Luftpolsters vom Verhältnis des Ausgangsvolumens zum Endvolumen abhängig. Daher ist es vorteilhaft, die Luftdurchlassöffnungen 9 möglichst schnell zu schließen. Bei der in Fig. 6 gezeigten Ausführungsvariante des Reibungsdämpfers wird das schnelle Schließen der Luftdurchlassöffnungen 9 dadurch realisiert, dass der Dämpferkolben 2 ein gegenüber einem inneren Kolbenteil 14 um eine Längsachse verdrehbares äußeres Kolbenteil 15 mit jeweils einem als Lochscheibe 14', 15' mit Luftdurchlassöffnungen 9 ausgebildeten Kolbenboden umfasst. Das Verdrehen der Lochscheibe 15' des äußeren Kolbenteils 15 erfolgt über einen an dessen Außenumfang vorgesehenen Führungssteg 16, in den der mit einer Führungsnut ausgebildete Reibbelagsträger 6 eingreift. In dieser Ausführung kann der Freilauf weitestgehend unabhängig von der Ventilöffnung gewählt werden, da das Öffnen und Schließen der Luftdurchlassöffnungen 9 über die Führungsnut im Reibbelagsträger 6 gesteuert wird.

### Bezugszeichenliste

- 1: Dämpfergehäuse
- 2: Dämpferkolben
- 3: Kolbenstange
- 4: Kolbendeckel
- 5: Kolbenboden
- 6: Reibbelagsträger
- 7: Reibelement
- 8: Bodenplatte von 1
- 9: Luftdurchlassöffnung (Durchlassventil)
- 10: Verdichtungsraum (Luftfeder)
- 11: Reibbelagsträgerplatte
- 12: Hohlraum in 2
- 13: Ventilverschlusselement
- 14: Inneres Kolbenteil
- 15: Äußeres Kolbenteil
- 16: Führungssteg
- 14', 15': Lochscheibe von 14, 15
- Pfeil A: Druckrichtung (Abwärtsbewegung)
- Pfeil B: Zugrichtung (Aufwärtsbewegung)

## Patentansprüche

1. Reibungsdämpfer mit richtungs- und amplitudenabhängiger Dämpfung für Trommelwaschmaschinen mit Schleudergang, der ein Dämpfergehäuse (1) und einen mit einer Kolbenstange (3) verbundenen, in Zug- und Druckrichtung beweglichen Dämpferkolben (2) mit mindestens einem an der Innenfläche des Dämpfergehäuses (1) wirkenden Reibelement (7) zur Erzeugung einer Dämpfkraft umfasst, **dadurch gekennzeichnet, dass** das Dämpfergehäuse (1) zwischen seinem Boden und den in einem am Dämpferkolben (2) zwischen einem ersten und zweiten Anschlag axial beweglich angeordneten Reibbelagsträger (6) gehaltenen Reibelementen (7) einen gasdicht schließbaren Verdichtungsraum (10) für eine sich in der Druckrichtung (Pfeil A) ausbildende Luftfeder zur Erzeugung einer zusätzlichen Dämpfkraft aufweist, und der Verdichtungsraum (10) bei der Bewegung des Dämpferkolbens in Zugrichtung über im Dämpferkolben (2) angeordnete, vom Reibbelagsträger (6) steuerbare Luftdurchlassöffnungen (9) mit der Umgebung verbindbar ist.

2. Reibungsdämpfer nach Anspruch 1, **dadurch gekennzeichnet, dass** im Verdichtungsraum zur Begrenzung des Druckaufbaus und zur Erzielung einer gleichmäßigen Dämpfkraft Mittel zur Entlüftung vorgesehen sind.

3. Reibungsdämpfer nach Anspruch 1, **dadurch gekennzeichnet, dass** der Dämpferkolben (2) einen Hohlraum (12) und einen Kolbendeckel (4) als ersten Anschlag zur Mitnahme des Reibbelagträgers (6) in der Druckrichtung sowie einen offenen Kolbenboden (5) als zweiten Anschlag zur Mitnahme des Reibbelagträgers (6) in Zugrichtung aufweist, und die Luftdurchlassöffnungen (9) so im Dämpferkolben (2) angeordnet sind, dass sie in der Anschlagposition des Reibbelagträgers (6) am Kolbendeckel (4) und gesteuert durch den Reibbelagträger im Wesentlichen geschlossen sind.

4. Reibungsdämpfer nach Anspruch 1, **dadurch gekennzeichnet, dass** der Dämpferkolben (2) einen Hohlraum (12) und einen offenen Kolbenboden (5) aufweist, dessen Ober- und Unterseite als erster bzw. zweiter Anschlag zur Mitnahme des Reibbelagsträgers (6) in der Druck- bzw. Zugrichtung dient, wobei von dem Reibbelagsträger (6) eine den Kolbenboden (5) im Abstand übergreifende Reibbelagsträgerplatte (11) mit Luftdurchlassöffnungen (9) abstrebt, in die nach der Freilaufphase bei der Abwärtsbewegung des Dämpferkolbens am Kolbenboden (5) ausgebildete Ventilverschlusselemente (13) eingreifen.

5. Reibungsdämpfer nach Anspruch 1, **dadurch gekennzeichnet, dass** der Dämpferkolben (2) ein inneres Kolbenteil (14) mit einem als Lochscheibe (14') ausgebildeten Kolbenboden und ein das innere Kolbenteil (14) umfassendes, um eine Längsachse drehbares äußeres Kolbenteil (15) mit einem als Lochscheibe (15') ausgebildeten Kolbenboden umfasst, wobei der am Außenumfang des äußeren Kolbenteils (15) angeordnete Reibbelagsträger (6) in einen am äußeren Kolbenteil (15) angeformten Führungssteg (16) zum Verdrehen der Lochscheibe (15') des äußeren Kolbenteils gegenüber der Lochscheibe (14') des inneren Kolbenteils und zum schnellen Schließen der Luftdurchlassöffnungen (9) eingreift.

## Claims

1. Friction damper providing direction-dependent and amplitude-dependent damping for drum washing machines having a spin cycle, which friction damper comprises a damper housing (1) and a damper piston (2) which is connected to a piston rod (3), is movable in the tension and compressive direction and comprises at least one friction element (7), which acts on the internal surface of the damper housing (1) and is intended for generating a damping force, **characterised in that** the damper housing (1) comprises, between the base thereof and the friction elements (7) retained in a friction lining support (6) that is arranged on the damper piston (2) so as to be axially movable between a first and second stop, a compression chamber (10), which can be closed in a gas-tight manner, for an air cushion forming in the compressive direction (arrow A), in order to generate an additional damping force and, when the damper piston is moved in the tension direction, the compression chamber (10) can be connected to the surroundings by means of air through-openings (9) in the damper piston (2) which can be controlled by the friction lining support (6).

2. Friction damper according to claim 1, **characterised in that** ventilation means are provided in the compression chamber in order to limit the build-up of pressure and to produce a uniform damping force.

3. Friction damper according to claim 1, **characterised in that** the damper piston (2) comprises a cavity (12) and a piston cover (4) as the first stop for driving the friction lining support (6) in the compressive direction, and an open piston head (5) as the second stop for driving the friction lining support (6) in the tension direction, and the air through-openings (9) are arranged in the damper piston (2) such that they are substantially closed when the friction lining support (6) on the piston cover (4) is in the stop position and in a manner controlled by the friction lining support.

4. Friction damper according to claim 1, **characterised in that** the damper piston (2) comprises a cavity (12) and an open piston head (5), the upper and lower side of which act as the first and second stop, respectively, for driving the friction lining support (6) in the compression and tension direction, respectively, a friction lining support plate (11) which has air through-openings (9) and engages over the piston head (5) at a distance therefrom being supported by the friction lining support (6), in which openings valve closure elements (13) formed on the piston head (5) engage following the free-running phase during the backward movement of the damper piston.

5. Friction damper according to claim 1, **characterised in that** the damper piston (2) comprises an inner piston part (14) having a piston head formed as a perforated disc (14') and an outer piston part (15), which surrounds the inner piston part (14), is rotatable about a longitudinal axis and comprises a piston head formed as a perforated disc (15'), the friction lining support (6) arranged on the outer circumference of the outer piston part (15) engaging in a guide lug (16) that is integrally moulded on the outer piston part (15) in order to rotate the perforated disc (15') of the outer piston part relative to the perforated disc (14') of the inner piston part and to rapidly close the air through-openings (9).

## Revendications

1. Amortisseur à friction avec amortissement en fonction de la direction et de l'amplitude pour machines à laver à tambour avec essorage, qui comprend un carter d'amortisseur (1) et un piston d'amortisseur (2), raccordé à une tige de piston (3) et mobile dans la direction de traction et de pression, avec au moins un élément de friction (7) agissant sur la surface intérieure du carter d'amortisseur (1) pour la production d'une force d'amortissement, **caractérisé en ce que** le carter d'amortisseur (1), entre son fond et les éléments de friction (7) retenus dans un support de garniture de friction (6) disposé de façon mobile axialement sur le piston d'amortisseur (2) entre une première et une deuxième butée, présente un espace de compression (10) pouvant être fermé de façon étanche aux gaz pour un coussin d'air se constituant dans la direction de pression (flèche A) pour la production d'une force d'amortissement supplémentaire, et l'espace de compression (10) peut, lors du mouvement du piston d'amortisseur dans la direction de traction, être raccordé à l'environnement par le biais d'ouvertures de passage d'air (9) pouvant être commandées par le support de garniture de friction (6) et disposées dans le piston d'amortisseur (2).

2. Amortisseur à friction selon la revendication 1, **caractérisé en ce que**, dans l'espace de compression, des moyens de désaération sont prévus pour la limitation de la montée en pression et pour l'obtention d'une force d'amortissement uniforme.

3. Amortisseur à friction selon la revendication 1, **caractérisé en ce que** le piston d'amortisseur (2) présente une cavité (12) et un couvercle de piston (4) en tant que première butée pour l'entraînement du support de garniture de friction (6) dans la direction de pression ainsi qu'un fond de piston (5) ouvert en tant que deuxième butée pour l'entraînement du support de garniture de friction (6) dans la direction de traction, et les ouvertures de passage d'air (9) sont disposées dans le piston d'amortisseur (2) de telle sorte qu'elles sont essentiellement fermées dans la position de butée du support de garniture de friction (6) sur le couvercle de piston (4) de façon à être commandées par le support de garniture de friction.

4. Amortisseur à friction selon la revendication 1, **caractérisé en ce que** le piston d'amortisseur (2) présente une cavité (12) et un fond de piston (5) ouvert dont le côté supérieur et inférieur sert de première ou respectivement de deuxième butée pour l'entraînement du support de garniture de friction (6) dans la direction de pression ou respectivement de traction, dans lequel une plaque de support de garniture de friction (11) avec des ouvertures de passage d'air (9), qui recouvre à distance le fond de piston (5), est soutenue par le support de garniture de friction (6), ouvertures dans lesquelles engrènent des éléments de fermeture de soupape (13) constitués sur le fond de piston (5) après la phase de roue libre lors du mouvement descendant du piston d'amortisseur.

5. Amortisseur à friction selon la revendication 1, **caractérisé en ce que** le piston d'amortisseur (2) comprend une partie de piston intérieure (14) avec un fond de piston constitué en tant que disque perforé (14'), et une partie de piston extérieure (15), comprenant la partie de piston intérieure (14) et pouvant tourner autour d'un axe longitudinal, avec un fond de piston constitué en tant que disque perforé (15'), dans lequel le support de garniture de friction (6) disposé sur la périphérie extérieure de la partie de piston extérieure (15) engrène dans une nervure de guidage (16) formée sur la partie de piston extérieure (15) pour la rotation du disque perforé (15') de la partie de piston extérieure par rapport au disque perforé (14') de la partie de piston intérieure et pour la fermeture rapide des ouvertures de passage d'air (9).
